# FASCICULE DE BREVET EUROPEEN

(11) **EP 1 486 376 B1**
(45) Date de publication et mention de la délivrance du brevet: **13.09.2006**
(21) Numéro de dépôt: 04360058.4
(22) Date de dépôt: 14.06.2004
(51) Int. Cl.: B60Q 1/14

(54) **Dispositif de commande permettant d'activer et de désactiver des fonctionnalités d'un véhicule**
Steueranordnung zum Aktivieren bzw. Deaktivieren von Funktionen eines Fahrzeuges
Control device for enabling or disabling functions of a vehicle

(30) Priorité: 13.06.2003 FR 0307129
(43) Date de publication de la demande: 15.12.2004
(73) Titulaire: Delphi Technologies Inc., Troy, MI 48007 (US)
(72) Inventeur: Zann, Olivier, 67280 Urmatt (FR); Kayser, Hervé, 67640 Fegersheim (FR); Largentier, Stéphane, 67112 Breuschwickersheim (FR)
(74) Mandataire: Merckling, Norbert

(56) Documents cités:
- EP-A- 0 255 688
- EP-A- 1 270 328
- DE-A- 2 240 944
- DE-A- 2 521 825
- US-A- 6 103 980

## Description

La présente invention concerne un dispositif de commande permettant d'activer et de désactiver des fonctions d'un véhicule. On trouve de tels dispositifs en général au voisinage de la colonne de direction ou du volant et ils sont en général actionnés à l'aide d'un levier de commande ou d'actionnement.

Ces dispositifs sont par exemple utilisés pour commander un essuie-glace, un avertisseur sonore ou lumineux, un indicateur de changement de direction ou toute autre fonction d'un véhicule qu'il convient d'activer et de désactiver à un moment ou à un autre. L'invention trouve donc son application également pour les dispositifs de commande impulsionnelle.

De tels dispositifs permettent donc de piloter le fonctionnement de certaines parties du véhicule et doivent par conséquent répondre à des critères de fiabilité relativement élevés.

Il est connu de réaliser des dispositifs de commande, permettant d'activer et de désactiver des fonctionnalités d'un véhicule comportant :
- un organe d'actionnement se déplaçant par rapport à au moins une position stable,
- un organe de positionnement se déplaçant sur une surface de repérage rapportée sur un support,
des moyens d'entraînement reliant l'organe de positionnement à l'organe d'actionnement et déplaçant l'organe de positionnement avec une manipulation de l'organe d'actionnement,
- des moyens de détermination de la position ou du mouvement de l'organe de positionnement sur la surface de repérage.

On connaît ainsi des moyens d'entraînement réalisés avec des systèmes de biellettes. Ces systèmes de biellettes présentent un inconvénient majeur dans la mesure où ils sont constitués d'un assemblage de pièces liées entre elles par des liaisons rotatives. Cet assemblage de pièces conduit inévitablement à des jeux fonctionnels entre lesdites pièces, susceptible de s'accroître au fil du temps. Ces jeux fonctionnels peuvent en outre rompre des contacts électriques ou induire des erreurs dans la détermination de la position de l'organe de positionnement, et de ce fait réduire substantiellement la fiabilité du dispositif.

On connaît par exemple par l'intermédiaire du document EP- 0 255 688, un dispositif de commande comportant un organe d'actionnement se déplaçant par rapport à au moins ue position stable. Le dispositif comporte des moyens d'entraînement pivotant d'une part sur l'organe d'actionnement et d'autre part sur le boîtier contenant ledit dispositif. Une telle conception engendre des contraintes fonctionnelles et structurelles sur les éléments constitutifs du dispositif. L'encombrement des moyens de liaison s'en trouve également accru.

Il y a donc un grand besoin pour réaliser des dispositifs de commande présentant une grande précision dans le repérage de l'organe de positionnement et notamment dans les commutations et les établissements de contacts électriques lors de mouvements d'un levier de commande ou d'actionnement.

Un autre but de la présente invention vise à réduire l'encombrement et le nombre de pièces en mouvement les unes par rapport aux autres et réduire ainsi le nombre d'étapes d'assemblage du dispositif, de même que le temps nécessaire à ces étapes d'assemblage.

Selon l'invention, les moyens d'entraînement comportent au moins un bras de liaison pivotant sur l'organe d'actionnement et au moins une charnière film reliant le bras de liaison à l'organe de positionnement.

La liaison directe, sans pièces intermédiaires, entre l'organe d'actionnement et le bras de liaison simplifie considérablement l'assemblage et le fonctionnement du dispositif de commande conforme à l'invention.

Par charnière film, il convient d'entendre toute liaison mécanique entre deux éléments, obtenue par une zone souple et/ou un rétrécissement de matière.

La charnière film, le bras de liaison et le chariot de commutation sont ainsi réalisés en une seule pièce, obtenue par exemple par injection plastique. Le prix de revient du dispositif conforme à l'invention est donc diminué par rapport à des solutions connues.

L'indépendance des moyens d'entraînement par rapport à un boîtier dans lequel est logé le dispositif de commande contribue à réduire l'encombrement desdits moyens d'entraînement et libère ainsi de la place pour d'autres fonctionnalités.

En outre, il n'y a pas d'apparition de jeu mécanique au fil du temps, lié à l'usure de pièces en mouvement les unes par rapport aux autres. La fiabilité dans le temps du dispositif conforme à l'invention est donc améliorée.

On peut ainsi réaliser sans surcoût substantiel sur le plan de l'assemblage des moyens d'entraînement comprenant un ou plusieurs bras de liaison et autant de charnières film, de manière à s'adapter à des dimensions ou à des contraintes particulières.

L'organe d'actionnement peut également se déplacer par translation suivant son axe longitudinal. Ceci permet par exemple de commander des fonctionnalités particulières.

Selon un mode de réalisation, l'organe d'actionnement est un levier d'actionnement pivotant autour d'au moins un axe I lors de son déplacement.

Selon un mode de réalisation, l'axe I s'étend de préférence dans un plan d'extension parallèle au plan d'extension de la surface de repérage.

Selon un mode de réalisation, l'axe de pivotement du ou des bras de liaison est parallèle à l'axe de pivotement I du levier d'actionnement.

Selon un mode de réalisation, le dispositif comporte une surface d'indexage fixe par rapport au support, un doigt d'indexage monté sur le levier d'actionnement et déplaçable en direction de la surface d'indexage, un ressort de compression sollicitant le doigt d'indexage lequel vient en appui sur la surface d'indexage, laquelle définit à l'aide d'un relief, au moins une position stable pour le doigt d'indexage et le levier d'actionnement.

Selon un mode de réalisation la surface d'indexage s'étend sensiblement perpendiculairement à la surface de repérage.

Selon un mode de réalisation la surface d'indexage définit au moins une position stable, dite normale, sur le trajet du doigt d'indexage selon une direction sensiblement orthogonale à la surface de repérage, et au moins une position stable ou non, dite parallèle, sur un autre trajet du doigt d'indexage selon une direction sensiblement parallèle à la surface de repérage, pour chaque position stable dite normale, au moins une position stable ou non dite parallèle, étant accessible.

Dans une position stable, le levier d'actionnement reste en position jusqu'à une prochaine manipulation, et ne revient pas automatiquement dans sa position verticale.

Selon un mode de réalisation, le levier d'actionnement présente également un axe de pivotement complémentaire J, orthogonal à l'axe de pivotement I et à la surface de repérage.

Selon un mode de réalisation le ou les bras de liaison sont montés par clipsage sur un axe de pivotement solidaire du levier d'actionnement.

Selon une variante de réalisation, le ou les bras de liaison sont liés au levier d'actionnement par l'intermédiaire d'au moins une charnière film complémentaire.

Selon un mode de réalisation le ou les bras de liaison, l'organe de positionnement et le levier d'actionnement sont réalisés en une seule pièce, par exemple par injection ou moulage.

Selon un mode de réalisation, le bras de liaison est relié au levier d'actionnement par intermédiaire d'une liaison mécanique du type rotule, autorisant un déplacement par translation de l'organe de positionnement, lors d'un pivotement du levier d'actionnement autour d'un axe K perpendiculaire à l'axe I et s'étendant dans un plan sensiblement parallèle au plan d'extension de la surface de repérage.

Selon un exemple de réalisation, les moyens d'entraînement comportant au moins un bras de liaison, l'organe de positionnement et au moins une charnière film constituant un sous-ensemble, lequel est monté pivotant sur le levier d'actionnement par l'intermédiaire d'une liaison mécanique du type rotule, autorisant un pivotement dudit levier autour de trois axes (I,J,K), dont deux (I,K) orthonormés s'étendent dans un plan sensiblement parallèle au plan d'extension de la surface de repérage et dont le troisième (J) est orthogonal à l'axe de pivotement (I) et à la surface de repérage.

Selon un mode de réalisation, la surface de repérage est une surface de contact, les moyens de détermination de la position de l'organe de positionnement étant réalisés grâce à des commutations électriques.

Selon un autre mode de réalisation les commutations électriques sont réalisées avec des doubles contacts électriques logés dans l'organe de positionnement, lequel constitue un chariot de commutation.

Selon un autre mode de réalisation les commutations électriques sont réalisées avec des lames métalliques flexibles, solidaires de l'organe de positionnement.

Selon un autre exemple de réalisation, les commutations électriques sont réalisées avec des rouleaux de commutation.

Selon un mode de réalisation, les moyens de détermination de la position comprennent des détecteurs capacitifs.

Selon un mode de réalisation les moyens de détermination de la position comprennent des capteurs de position ou de mouvement.

D'autres caractéristiques et avantages ressortiront également de la description détaillée figurant ci-après en référence aux dessins annexés à titre d'exemple, dans lesquels :
- la figure 1 est une vue en coupe longitudinale d'un exemple de réalisation d'un dispositif de commande conforme à l'invention,
- les figures 2 et 3 correspondent à des positionnements différents d'un levier d'actionnement du dispositif de commande de la figure 1,
- la figure 4 représente une vue en perspective d'un exemple de réalisation d'un chariot de commutation d'un dispositif de commande conforme à l'invention.

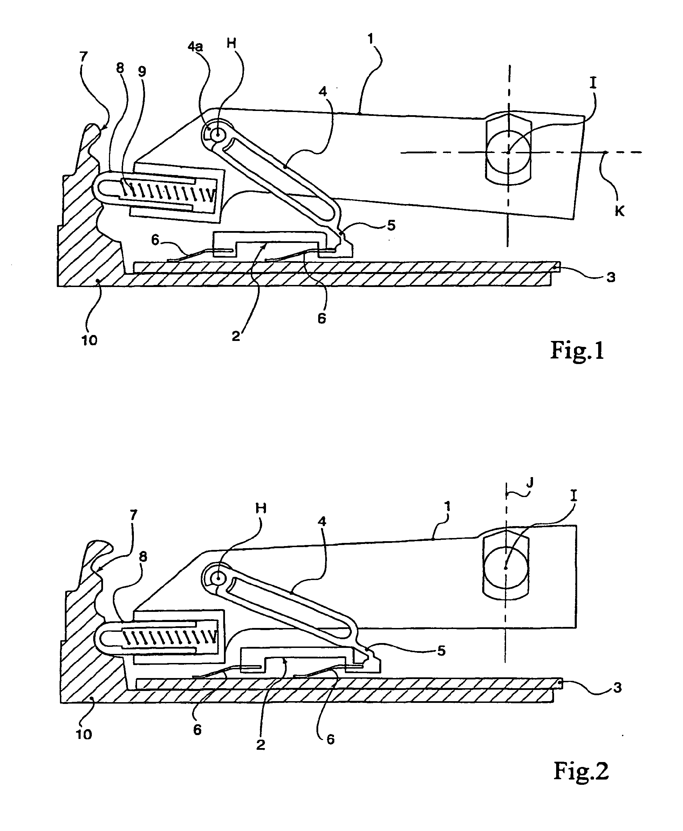

La présente invention concerne un dispositif de commande permettant par exemple d'activer et de désactiver des fonctionnalités d'un véhicule. Un tel dispositif de commande est représenté par exemples aux figures 1 à 4. Le dispositif de commande conforme à l'invention comporte un organe d'actionnement pivotant autour d'un axe I pour occuper par exemple plusieurs positions dont au moins une est stable. A titre d'exemple, l'organe d'actionnement se déplace entre deux positions stables accessibles par pivotement autour de l'axe I dudit organe d'actionnement. Chacune des positions stables correspond ainsi à une activation
ou à une désactivation d'une ou plusieurs fonctionnalités. Le dispositif de commande comporte également un organe de positionnement se déplaçant sur une surface de repérage 3. La surface de repérage 3 est par exemple une surface de contact comportant des grilles conductrices surmoulées ou des circuits imprimés souples, ou une surface présentant des zones conductrices le long du trajet de l'organe de positionnement. Ce dernier est par exemple constitué d'un chariot de commutation 2.

La surface de repérage 3, en association avec des moyens de détermination de la position, permet de déterminer la position de l'organe de positionnement. Chaque position de l'organe de positionnement correspond à une activation ou une désactivation d'au moins une fonctionnalité du véhicule ou à un changement d'état d'une fonction.

Les moyens de détermination de la position sont par exemple réalisés grâce à des commutations électriques. Ces dernières sont réalisées avec des doubles contacts électriques logés dans l'organe de positionnement, lequel constitue le chariot de commutation 2.

Selon une variante de réalisation, les moyens de détermination de la position comprennent des détecteurs capacitifs, connus en tant que tel ou des capteurs de position ou de mouvement.

Le dispositif de commande conforme à l'invention comporte aussi des moyens d'entraînement reliant le chariot de commutation 2 au levier d'actionnement 1 et déplaçant ledit chariot avec le pivotement du levier d'actionnement 1. On obtient ainsi un positionnement particulier du chariot de commutation 2 sur la surface de repérage 3 et ce pour chacune des positions stables du levier d'actionnement 1. Des contacts électriques correspondants peuvent ainsi être activés ou désactivés par l'intermédiaire du chariot de commutation 2.

Les moyens d'entraînement comportent au moins un bras de liaison 4 pivotant autour d'un axe H sur le levier d'actionnement 1 et au moins une charnière film 5 reliant le bras de liaison 4 au chariot de commutation 2.

La charnière film 5 permet ainsi de transformer un mouvement de pivotement du levier d'actionnement 1 en un mouvement ou un déplacement plan du chariot de commutation 2. Le plan d'extension dans lequel se déplace le chariot de commutation 2 est donc parallèle à la surface de repérage 3.

Le levier d'actionnement 1 pivote selon l'axe I, s'étendant de préférence dans un plan d'extension parallèle au plan d'extension de la surface de repérage 3.

En outre l'axe de pivotement H du ou des bras de liaison 4 est parallèle à l'axe de pivotement I du levier d'actionnement 1. Ceci permet, en combinaison avec la charnière film 5, de transformer un mouvement de pivotement du levier d'actionnement 1 en un mouvement de translation du chariot de commutation 2.

Le chariot de commutation 2 comporte des lames métalliques 6 partiellement surmoulées et réalisant des contacts électriques sur la surface de repérage 3. Les lames métalliques 6 présentent avantageusement une flexibilité assurant la fiabilité des contacts électriques sur la surface de repérage 3. Le bras de liaison 4 exerce une poussée sur le chariot de commutation 2, permettant d'obtenir un déplacement dudit chariot dans un plan d'extension parallèle à la surface de repérage 3.

Les lames métalliques 6 permettant la commutation électrique peuvent avantageusement être remplacées par des rouleaux de commutation maintenues en position par des ressorts s'étendant orthogonalement par rapport à la surface de repérage 3, laquelle constitue une surface de contact.

Selon un exemple de réalisation, le dispositif de commande conforme à l'invention comporte également une surface d'indexage 7 fixe et un doigt d'indexage 8 monté sur le levier d'actionnement 1. Le doigt d'indexage 8 se déplace longitudinalement par rapport au levier d'actionnement 1 sous l'effet d'un ressort de compression 9 sollicitant le doigt d'indexage 8. Ce dernier vient en appui sur la surface d'indexage 7, laquelle définit à l'aide d'un relief, au moins une ou par exemple deux positions stables pour le doigt d'indexage 8 et par conséquent pour le levier d'actionnement 1.

Selon un exemple de réalisation, la surface d'indexage 7 est une partie intégrante d'un support 10 sur lequel est rapporté la surface de repérage 3. Le ressort de compression 9 permet ainsi de pousser le doigt d'indexage 8 contre le relief de la surface d'indexage 7 dont la configuration permet de définir les positions stables du levier d'actionnement 1. A chacune des positions du levier d'actionnement 1 correspond un positionnement du chariot de commutation 2 sur la surface de repérage 3.

Selon un exemple de réalisation, le levier d'actionnement 1 présente un axe de pivotement J complémentaire, perpendiculaire à l'axe de pivotement I et à la surface de repérage 3. Un tel pivotement du levier d'actionnement 1 entraîne également un pivotement du chariot de commutation 2 dans un plan parallèle à la surface de repérage 3. Les lames métalliques 6 peuvent ainsi atteindre des contacts électriques complémentaires.

La surface d'indexage 7 définit au moins une position stable, dite normale, sur le trajet du doigt d'indexage 8, s'étendant selon une direction sensiblement orthogonale à la surface de repérage 3.

La surface d'indexage 7 définit également au moins une position stable, dite parallèle, sur un autre trajet du doigt d'indexage 8, s'étendant selon une direction sensiblement parallèle à la surface de repérage 3. Pour chaque position stable dite normale, au moins une position stable dite parallèle est accessible.

Avantageusement la surface d'indexage 7 s'étend sensiblement perpendiculairement à la surface de repérage 3. La surface d'indexage 7 permet de définir par exemple deux positions stables dites normales s'étendant selon une direction sensiblement orthogonale à la surface de repérage 3 et par exemple deux positions stables dites parallèles s'étendant selon une direction sensiblement parallèle à la surface de repérage 3.

A titre d'exemple, deux positions stables dites parallèles sont accessibles pour chacune des positions stables dites normales.

On obtient avec le pivotement autour de l'axe complémentaire J du levier d'actionnement 1, des déplacements en arc de cercle des lames métalliques 6 entre des positions stables dites parallèles définies par le doigt d'indexage 8. On obtient pour un positionnement particulier du levier d'actionnement 1, par exemple représenté à la figure 2, une ou plusieurs positions stables complémentaires accessibles par pivotement du levier d'actionnement 1 autour de l'axe J orthogonal à la surface de repérage 3. Il est ainsi possible d'activer ou de désactiver des fonctionnalités complémentaires.

A titre d'exemple, la figure 1 montre le dispositif de commande avec le levier d'actionnement 1 dans une position centrale correspondant par exemple à une désactivation de toutes les fonctionnalités accessibles.

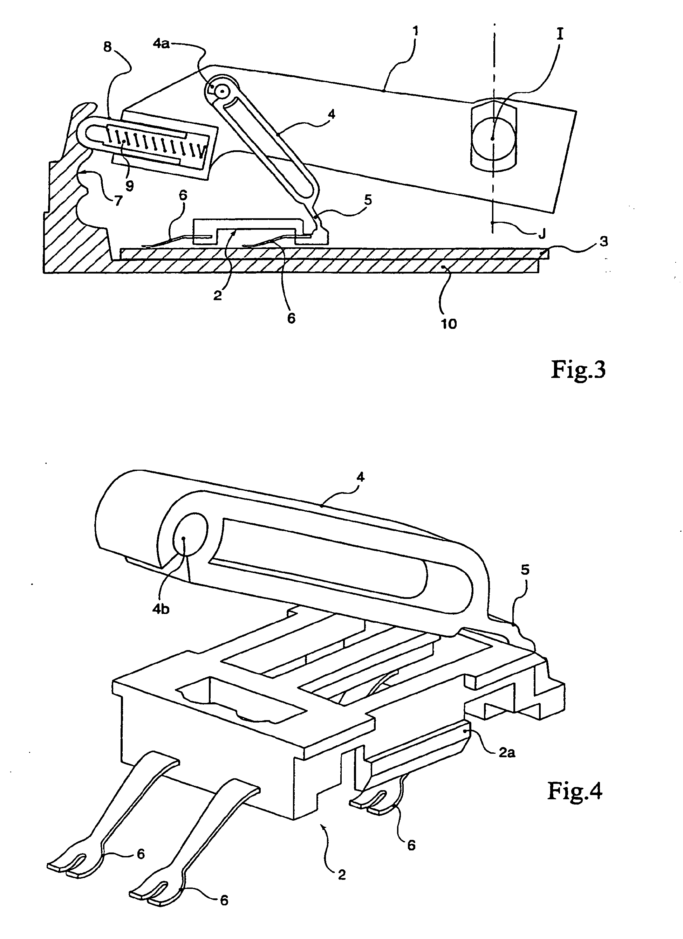

Les figures 2 et 3 correspondent respectivement à une première et à une seconde position de commutation pour le chariot de commutation 2. Ainsi, dans la première ou dans la seconde position de commutation, il est encore possible d'accéder à des fonctionnalités complémentaires en pivotant le levier d'actionnement 1 autour de l'axe J.

La figure 4 représentant un exemple de réalisation du chariot de commutation 2, montre d'une part les lames métalliques 6 surmoulées partiellement dans la structure du chariot de commutation 2 et d'autre part, le bras de liaison 4 relié au chariot de commutation 2 par l'intermédiaire de la charnière film 5. Cette dernière réalise une zone de liaison élastique entre le bras de liaison 4 et le chariot de commutation 2.

Le bras de liaison 4 présente également à son extrémité supérieure un passage 4b sensiblement cylindrique lui permettant d'être monté par exemple par clipsage sur l'axe de pivotement H solidaire du levier d'actionnement 1.

L'opération de clipsage du bras de liaison 4 sur l'axe de pivotement H est rendue possible par une branche 4a fendue située à l'extrémité du bras de liaison 4, la branche fendue 4a délimitant également le passage 4b.

Le chariot de commutation 2 est pourvu latéralement de bords saillants longitudinaux 2a destinés à s'engager dans des rainures correspondantes solidaires de la surface de repérage 3, du support 10 ou de l'élément structurel comportant les axes I et J. On obtient ainsi un guidage et un positionnement relatif optimal entre le chariot de commutation 2 et la surface de repérage 3 tout au long de son coulissement sur ladite surface de repérage 3. Un pivotement autour de l'axe J du levier d'actionnement 1 s'avère cependant impossible sauf dans le cas où les rainures recevant les bords saillants 2a peuvent pivoter autour de l'axe J et ne sont pas solidaires de la surface de repérage 3.

Selon un autre exemple de réalisation non représenté aux figures le chariot de commutation 2 peut être pourvu de deux bras de liaison 4 localisés de part et d'autre du levier d'actionnement 1.

Selon une variante de réalisation, le levier d'actionnement 1 peut être pivoté au tour de l'axe K perpendiculaire aux axes I et J. Le chariot 2 se déplace alors par translation selon la direction I sur la surface de repérage 3. Dans une telle réalisation, la liaison entre le bras de liaison 4 et le levier d'actionnement 1 est une liaison élastique à rotule.

A titre d'exemple, les moyens d'entraînement comportent au moins un bras de liaison 4, l'organe de positionnement et au moins une charnière film 5, constituant ainsi un sous-ensemble. Ce dernier est monté pivotant sur le levier d'actionnement 1 par l'intermédiaire d'une liaison mécanique du type rotule, autorisant un pivotement dudit levier 1 autour de trois axes I, J, K.

Les axes I et K sont orthonormés et s'étendent dans un plan sensiblement parallèle au plan d'extension de la surface de repérage 3. Le troisième axe J est orthogonal à l'axe de pivotement I et à la surface de repérage 3.

Selon un exemple de réalisation, le ou les bras de liaison 4, le chariot 2 et le levier d'actionnement 1 sont réalisés en une seule pièce, par exemple par injection ou moulage. Le ou les bras de liaison 4 sont alors liés au levier d'actionnement 1 par l'intermédiaire d'au moins une charnière film complémentaire.

Selon une variante de réalisation du dispositif de commande conforme à l'invention, l'axe I est fixe par rapport au support et à la surface de repérage 3. L'axe J, montré par exemple à la figure 3, est alors dissocié du sous-ensemble comprenant l'axe I, la surface de repérage 3 et le support 10. C'est en fait le sous-ensemble précité I, 3, 10 qui pivote autour de l'axe J. Ce pivotement est alors contrôlé par une surface d'indexage et un doigt d'indexage complémentaires, non représentés.

On obtient ainsi dans tous les exemples de réalisation un sous-ensemble indépendant d'un boîtier ou d'un bâti dans lequel est monté le dispositif conforme à l'invention. La simplification structurelle et fonctionnelle des pièces constitutives dudit dispositif contribue également à une fiabilité de fonctionnement ainsi qu'à un encombrement optimisé.

Selon l'application considérée, certaines positions stables pour le levier d'actionnement peuvent être remplacées par des positions dites non stables ou impulsionnelles, ou inversement, sans sortir du cadre de la présente invention.

## Revendications

1. Dispositif de commande, permettant d'activer et de désactiver des fonctionnalités d'un véhicule, comportant :
- un organe d'actionnement se déplaçant par rapport à au moins une position stable,
- un organe de positionnement se déplaçant sur une surface de repérage (3) rapportée sur un support (10),
- des moyens d'entraînement reliant l'organe de positionnement à l'organe d'actionnement et déplaçant l'organe de positionnement avec une manipulation de l'organe d'actionnement,
- des moyens de détermination de la position ou du mouvement de l'organe de positionnement sur la surface de repérage (3),
**caractérisé en ce que**
les moyens d'entraînement comportent au moins un bras de liaison (4), pivotant exclusivement sur l'organe d'actionnement, et au moins une charnière film (5) reliant le bras de liaison (4) à l'organe de positionnement.

2. Dispositif de commande selon la revendication 1, **caractérisé en ce que** l'organe d'actionnement se déplace par translation suivant son axe longitudinal.

3. Dispositif de commande selon la revendication 1 ou 2, **caractérisé en ce que** l'organe d'actionnement est un levier d'actionnement (1) pivotant autour d'au moins un axe (I), lors de son déplacement.

4. Dispositif selon la revendication 3, **caractérisé en ce que** l'axe (I) s'étend de préférence dans un plan d'extension parallèle au plan d'extension de la surface de repérage (3).

5. Dispositif selon la revendication 3 ou 4, **caractérisé en ce que** l'axe de pivotement du ou des bras de liaison (4) est parallèle à l'axe de pivotement (I) du levier d'actionnement (1).

6. Dispositif selon l'une quelconque des revendications 3 à 5, **caractérisé en ce qu'**il comporte une surface d'indexage (7) fixe par rapport au support (10), un doigt d'indexage (8) monté sur le levier d'actionnement (1) et déplaçable en direction de la surface d'indexage (7), un ressort de compression (9) sollicitant le doigt d'indexage (8), lequel vient en appui sur la surface d'indexage (7), laquelle définit à l'aide d'un relief, au moins une position stable pour le doigt d'indexage (8) et le levier d'actionnement (1).

7. Dispositif selon la revendication 6, **caractérisé en ce que** la surface d'indexage (7) s'étend sensiblement perpendiculairement à la surface de repérage (3).

8. Dispositif selon la revendication 7, **caractérisé en ce que** la surface d'indexage (7) définit au moins une position stable, dite normale, sur le trajet du doigt d'indexage (8) selon une direction sensiblement orthogonale la surface de repérage (3), et au moins une position stable ou non, dite parallèle, sur un autre trajet du doigt d'indexage (8) selon une direction sensiblement parallèle à la surface de repérage (3), pour chaque position stable dite normale, au moins une position stable ou non dite parallèle étant accessible.

9. Dispositif selon la revendication 8, **caractérisé en ce que** le levier d'actionnement (1) présente également un axe de pivotement complémentaire (J), orthogonal à l'axe de pivotement (I) et à la surface de repérage (3).

10. Dispositif selon l'une quelconque des revendications 3 à 9, **caractérisé en ce que** le ou les bras de liaison (4) sont montés par clipsage sur un axe de pivotement solidaire du levier d'actionnement (1).

11. Dispositif selon l'une quelconque des revendications 3 à 9, **caractérisé en ce que** le ou les bras de liaison (4) sont liés au levier d'actionnement (1) par l'intermédiaire d'au moins une charnière film (5) complémentaire.

12. Dispositif selon la revendication 11, **caractérisé en ce que** le ou les bras de liaison (4), l'organe de positionnement et le levier d'actionnement (1) sont réalisés en une seule pièce, par exemple par injection ou moulage.

13. Dispositif selon la revendication 3, **caractérisé en ce que** le bras de liaison (4) est relié au levier d'actionnement (1) par l'intermédiaire d'une liaison mécanique du type rotule, autorisant un déplacement par translation de l'organe de positionnement, lors d'un pivotement du levier d'actionnement (1) autour d'un axe (K) normal à l'axe (I) et s'étendant dans un plan sensiblement parallèle au plan d'extension de la surface de repérage (3).

14. Dispositif de commande selon la revendication 1, **caractérisé en ce que** les moyens d'entraînement comportent au moins un bras de liaison (4), l'organe de positionnement et au moins une charnière film (5) constituant un sous-ensemble, lequel est monté pivotant sur le levier d'actionnement (1) par l'intermédiaire d'une liaison mécanique du type rotule, autorisant un pivotement dudit levier (1) autour de trois axes (I, J, K), dont deux (I, K) orthonormés s'étendent dans un plan sensiblement parallèle au plan d'extension de la surface de repérage (3) et dont le troisième (J) est orthogonal à l'axe de pivotement (I) et à la surface de repérage (3).

15. Dispositif de commande selon l'une quelconque des revendications 1 à 14, **caractérisé en ce que** la surface de repérage (3) est une surface de contact, les moyens de détermination de la position de l'organe de positionnement étant réalisés grâce à des commutations électriques.

16. Dispositif de commande selon la revendication 15, **caractérisé en ce que** les commutations électriques sont réalisées avec des doubles contacts électriques logés dans l'organe de positionnement, lequel constitue un chariot de commutation (2).

17. Dispositif de commande selon la revendication 16, **caractérisé en ce que** les commutations électriques sont réalisées avec des lames métalliques flexibles (6) solidaires de l'organe de positionnement.

18. Dispositif de commande selon la revendication 16, **caractérisé en ce que** les commutations électriques sont réalisées avec des rouleaux de commutation.

19. Dispositif de commande selon l'une quelconque des revendications 1 à 14, **caractérisé en ce que** les moyens de détermination de la position comprennent des détecteurs capacitifs.

20. Dispositif de commande selon l'une quelconque des revendications 1 à 14, **caractérisé en ce que** les moyens de détermination de la position comprennent des capteurs de position ou de mouvement.

## Claims

1. Control device enabling functions of a vehicle to be activated and deactivated, comprising:
- an actuator element which moves relative to at least one stable position,
- a positioning element which moves on a position finding surface (3) joined to a support (10),
- drive means which link the positioning element to the actuator element and displace the positioning element when the actuator element is manipulated,
- means for determining the position or the movement of the positioning element on the position finding surface (3),
**characterised in that**
the drive means have at least one linking arm (4) pivoting exclusively on the actuator element and at least one integral hinge (5) linking the linking arm (4) to the positioning element.

2. Control device as claimed in claim 1, **characterised in that** the actuator element is displaced in a translating movement along its longitudinal axis.

3. Control device as claimed in claim 1 or 2, **characterised in that** the actuator element is an actuator lever (1) pivoting about at least one axis (I) as it is displaced.

4. Device as claimed in claim 3, **characterised in that** the axis (I) preferably extends in a plane of extension parallel with the plane of extension of the position finding surface (3).

5. Device as claimed in claim 3 or 4, **characterised in that** pivot axis of the linking arm or arms (4) is parallel with the pivot axis (I) of the actuator lever (1).

6. Device as claimed in any one of claims 3 to 5, **characterised in that** it has an indexing surface (7) which is fixed relative to the support (10), an indexing finger (8) mounted on the actuator lever (1) and displaceable in the direction of the indexing surface (7), a compression spring (9) biassing the indexing finger (8) which is moved so as to be supported on the indexing surface (7) which, with the aid of a relief, defines at least one stable position for the indexing finger (8) and the actuator lever (1).

7. Device as claimed in claim 6, **characterised in that** the indexing surface (7) extends substantially perpendicular to the position finding surface (3).

8. Device as claimed in claim 7, **characterised in that** the indexing surface (7) defines at least one stable position, referred to as the normal position, on the path of the indexing finger (8) in a direction substantially orthogonal to the position finding surface (3) and at least one position, which may or may not be stable, referred to as the parallel position, on another path of the indexing finger (8) in a direction substantially parallel with the position finding surface (3), whereby at least one stable or unstable position of the parallel type is accessible for each stable position of the normal type.

9. Device as claimed in claim 8, **characterised in that** the actuator lever (1) also has a complementary pivot axis (J) orthogonal to the pivot axis (I) and to the position finding surface (3).

10. Device as claimed in any one of claims 3 to 9, **characterised in that** the linking arm or arms (4) are mounted by a clip-fit arrangement on a pivot shaft joined to the actuator lever (1).

11. Device as claimed in any one of claims 3 to 9, **characterised in that** the linking arm or arms (4) are linked to the actuator lever (1) via at least one complementary integral hinge (5).

12. Device as claimed in claim 11, **characterised in that** the linking arm or arms (4), the positioning element and the actuator lever (1) are made in a single piece, for example by injection or moulding.

13. Device as claimed in claim 3, **characterised in that** the linking arm (4) is linked to the actuator lever (1) via a mechanical link of the ball and socket type, permitting a displacement due to the translating movement of the positioning element when the actuator lever (1) is pivoted about an axis (K) normal to the axis (I) and extending in a plane substantially parallel with the plane of extension of the position finding surface (3).

14. Control device as claimed in claim 1, **characterised in that** the drive means comprise at least one linking arm (4), the positioning element and at least one integral hinge (5) constituting a sub-unit, which is mounted so as to be pivotable on the actuator lever (1) via a mechanical link of the ball and socket type, permitting a pivoting movement of said lever (1) about three axes (I, J, K), two (I, K) of which are orthonormalised, extending in a plane substantially parallel with the plane of extension of the position finding surface (3), and the third (J) of which is orthogonal to the pivot axis (I) and to the position finding surface (3).

15. Control device as claimed in any one of claims 1 to 14, **characterised in that** the position finding surface (3) is a contact surface and the means for determining the position of the positioning element are provided in the form of electric switching systems.

16. Control device as claimed in claim 15, **characterised in that** the electric switching systems are configured with double electric contacts housed in the positioning element, which constitutes a switching carriage (2).

17. Control device as claimed in claim 16, **characterised in that** the electric switching systems are provided with flexible metal strips (6) which are joined to the positioning element.

18. Control device as claimed in claim 16, **characterised in that** the electric switching systems are provided with switching rollers.

19. Control device as claimed in any one of claims 1 to 14, **characterised in that** the means for determining the position comprise capacitive detectors.

20. Control device as claimed in any one of claims 1 to 14, **characterised in that** the means for determining the position comprise position or motion sensors.

## Patentansprüche

1. Steuervorrichtung, die es ermöglicht Funktionen eines Fahrzeugs zu aktivieren und zu deaktivieren, umfassend:
- eine Betätigungseinrichtung, die sich in Bezug auf mindestens einer stabilen Position verschiebt,
- eine Positioniereinrichtung, die sich auf einer Markierungsoberfläche (3), die auf einem Träger (10) angeordnet ist, verschiebt,
- Antriebsmittel, die die Positioniereinrichtung mit der Betätigungseinrichtung verbinden und die Positioniereinrichtung durch eine Bedienung der Betätigungseinrichtung verschieben,
- Positions- oder Bewegungs-Bestimmungsmittel der Positioniereinrichtung auf der Markierungsoberfläche (3),
**dadurch gekennzeichnet, dass**
die Antriebsmittel mindestens einen Verbindungsarm (4), welcher ausschließlich auf der Betätigungseinrichtung schwenkbar ist, und mindestens ein Schamierhäutchen (5) umfassen, das den Verbindungsarm (4) mit der Positioniereinrichtung verbindet.

2. Steuervorrichtung nach Anspruch 1, **dadurch gekennzeichnet, dass** die Betätigungseinrichtung sich durch Translation, die ihrer Längsachse folgt, verschiebt.

3. Steuervorrichtung nach Anspruch 1 oder 2, **dadurch gekennzeichnet, dass** die Betätigungseinrichtung ein Betätigungshebel (1) ist, der bei seiner Verschiebung schwenkbar um mindestens eine Achse (I) ist.

4. Vorrichtung nach Anspruch 3, **dadurch gekennzeichnet, dass** die Achse (I) sich vorzugsweise in einer Ausdehnungsebene parallel zur Ausdehnungsebene der Markierungsoberfläche (3) erstreckt.

5. Vorrichtung nach Anspruch 3 oder 4, **dadurch gekennzeichnet, dass** die Schwenkachse des oder der Verbindungsarme (4) parallel zur Schwenkachse (I) des Betätigungshebels (1) ist.

6. Vorrichtung nach einem der Ansprüche 3 bis 5, **dadurch gekennzeichnet, dass** sie eine in Bezug auf den Träger (10) feste Indexierungs-Oberfläche (7), einen auf dem Betätigungshebel (1) angebrachten und in Richtung der Indexierungs-Oberfläche (7) verschiebbaren Indexierungs-Stift (8), eine Kompressionsfeder (9), die den Indexierungs-Stift (8) beansprucht, umfasst, wobei der Stift auf der Indexierungs-Oberfläche (7) zum Aufliegen kommt, die mit Hilfe eines Reliefs mindestens eine stabile Position für den Indexierungs-Stift (8) und den Betätigungshebel (1) festgelegt ist.

7. Vorrichtung nach Anspruch 6, **dadurch gekennzeichnet, dass** sich die Indexierungs-Oberfläche (7) im Wesentlichen senkrecht zu der Markierungsoberfläche (3) erstreckt.

8. Vorrichtung nach Anspruch 7, **dadurch gekennzeichnet, dass** die Indexierungs-Oberfläche (7) mindestens eine stabile, als normal bezeichnete Position, auf dem Weg des Indexierungs-Stift (8) gemäß einer im Wesentlichen orthogonalen Richtung zur Markierungsoberfläche (3), und mindestens eine stabile oder nicht stabile, als parallel bezeichnete Position, auf einem anderen Weg des Indexierungs-Stift (8) gemäß einer im Wesentlichen parallelen Richtung zur Markierungsoberfläche (3) festlegt, wobei für jede stabile, als normal bezeichnete Position, mindestens eine stabile oder nicht stabile, als parallel bezeichnete Position zugänglich ist.

9. Vorrichtung nach Anspruch 8, **dadurch gekennzeichnet, dass** der Betätigungshebel (1) auch eine komplementäre Schwenkachse (J), orthogonal zur Schwenkachse (I) und zur Markierungsoberfläche (3) aufweist.

10. Vorrichtung nach einem der Ansprüche 3 bis 9, **dadurch gekennzeichnet, dass** der oder die Verbindungsarme (4) durch Clipsung auf einer mit dem Betätigungshebel (1) zusammenhaltenden Schwenkachse angebracht sind.

11. Vorrichtung nach einem der Ansprüche 3 bis 9, **dadurch gekennzeichnet, dass** der oder die Verbindungsarme (4) mit dem Betätigungshebel (1) durch Vermittlung mindestens eines komplementären Scharnierhäutchens (5) verbunden sind.

12. Vorrichtung nach Anspruch 11, **dadurch gekennzeichnet, dass** der oder die Verbindungsarme (4), die Positioniereinrichtung und der Betätigungshebel (1) in einem einzigen Stück gebildet sind, zum Beispiel durch Spritzung oder Formung.

13. Vorrichtung nach Anspruch 3, **dadurch gekennzeichnet, dass** der Verbindungsarm (4) mit dem Betätigungshebel (1) durch Vermittlung einer mechanischen Verbindung des Kugelgelenktyps verbunden ist, was eine Verschiebung durch Translation der Positioniereinrichtung, bei einer Schwenkung des Betätigungshebels (1) um eine Achse (K) normal zur Achse (I) erlaubt und sich in einer Ebene im Wesentlichen parallel zur Ausdehnungsebene der Markierungsoberfläche (3) erstreckt.

14. Steuervorrichtung nach Anspruch 1, **dadurch gekennzeichnet, dass** die Antriebsmittel mindestens einen Verbindungsarm (4), die Positioniereinrichtung und mindestens ein Schamierhäutchen (5) umfassen, das eine Untereinheit bildet, die schwenkbar auf dem Betätigungshebel (1) durch Vermittlung einer mechanischen Verbindung des Kugelgelenktyps angebracht ist, was eine Schwenkung des Hebels (1) um drei Achsen (I, J, K) erlaubt, von denen sich zwei Orthonormale (I, K) in einer im Wesentlichen parallelen Ebene zur Ausdehnungsebene der Markierungsoberfläche (3) erstreckt und von denen die dritte (J) orthogonal zur Schwenkachse (I) und zur Markierungsoberfläche (3) ist.

15. Steuervorrichtung nach einem der Ansprüche 1 bis 14, **dadurch gekennzeichnet, dass** die Markierungsoberfläche (3) eine Kontaktoberfläche ist, wobei die Positions-Bestimmungsmittel der Positioniereinrichtung mittels elektrischer Schaltungen gebildet sind.

16. Steuervorrichtung nach Anspruch 15, **dadurch gekennzeichnet, dass** die elektrischen Schaltungen mit elektrischen Doppelkontakten gebildet, die in der Positioniereinrichtung untergebracht sind, welche einen Schaltwagen (2) bildet.

17. Steuervorrichtung nach Anspruch 16, **dadurch gekennzeichnet, dass** die elektrischen Schaltungen mit metallischen, flexiblen Blättern (6) gebildet sind, die mit der Positioniereinrichtung zusammenhalten.

18. Steuervorrichtung nach Anspruch 16, **dadurch gekennzeichnet, dass** die elektrischen Schaltungen mit Schaltrollen gebildet sind.

19. Steuervorrichtung nach einem der Ansprüche 1 bis 14, **dadurch gekennzeichnet, dass** die Positions-Bestimmungsmittel kapazitive Detektoren umfassen.

20. Steuervorrichtung nach einem der Ansprüche 1 bis 14, **dadurch gekennzeichnet, dass** die Positions-Bestimmungsmittel Fühler der Position oder der Bewegung umfassen.
